# DEMANDE DE BREVET EUROPEEN

(11) **EP 0 685 150 A1**
(43) Date de publication de la demande: **06.12.1995**
(21) Numéro de dépôt: 95401228.2
(22) Date de dépôt: 24.05.1995
(51) Int. Cl.: A01D 51/00

(54) **Dispositif pour le ramassage sur le sol de produits agricoles de petites dimensions tels que des fruits**

(30) Priorité: 26.05.1994 FR 9406719
(71) Demandeur: Dumaine, André, F-47290 Mombahus (FR); Geraud, Thierry, F-47380 Monclar (FR); Azorin, Jean-Yves, F-47380 Montastruc (FR)
(72) Inventeur: AZORIN, Jean-Yves, MONTASTRUC (FR); DUMAINE, André, MOMBAHUS (FR)
(74) Mandataire: Nony, Michel

(57) **Abrégé**

Dispositif pour le ramassage sur le sol de produits agricoles de petites dimensions, tels que des prunes.

Il comporte un châssis (3), une brosse cylindrique (4) montée librement rotative sur le châssis (3), autour d'un axe horizontal (7) et apte à rouler sur le sol lors de l'avancement du châssis (3), un balai rotatif (5) d'axe horizontal (11) situé à l'arrière de la brosse (4) et en contact avec le sol, entraîné en rotation à vitesse élevée en sens inverse du sens de rotation de la brosse (4), et un moyen de récupération (17) des fruits situé à proximité du balai rotatif (5).

## Description

La présente invention a pour objet un dispositif pour le ramassage sur le sol de produits agricoles de petites dimensions tels que des fruits, notamment des prunes.

Le ramassage des prunes s'effectue traditionnellement à la main, mais cette méthode présente l'inconvénient de requérir une main d'oeuvre importante, ce qui se traduit par des coûts de production relativement élevés.

La présente invention se propose de résoudre ce problème en fournissant un nouveau dispositif simple et économique pour le ramassage de prunes, mais qui peut également être utilisé pour d'autres produits agricoles, en particulier d'autres fruits de petites dimensions, comme par exemple des châtaignes.

La présente invention a pour objet un dispositif pour le ramassage sur le sol de produits agricoles de petites dimensions, caractérisé par le fait qu'il comporte un châssis, une brosse cylindrique montée librement rotative sur le châssis autour d'un axe horizontal et apte à rouler sur le sol lors de l'avancement du châssis, un balai rotatif d'axe horizontal situé en arrière de la brosse et en contact avec le sol, entraîné en rotation à vitesse élevée en sens inverse du sens de rotation de la brosse, et un moyen de récupération des fruits situé à proximité du balai rotatif.

Le dispositif selon l'invention permet de ramasser très facilement la totalité des fruits présents sur le sol sans les détériorer, et ce, quelles que soient les irrégularités de la surface du sol sur lequel les fruits sont répandus.

En effet, il suffit de monter le dispositif selon l'invention à l'avant d'un véhicule agricole pour le déplacer à la surface du sol au pied des arbres dont on veut ramasser les fruits.

Selon un mode de réalisation préféré de l'invention, le châssis repose sur le sol par l'intermédiaire de roues pivantes montées sur des vérins qui permettent de faire varier la garde-au-sol, tandis que la brosse cylindrique d'axe horizontal est maintenue par des bras munis de contrepoids réglables qui permettent de régler la force d'appui de la brosse sur le sol.

Selon l'invention, le châssis est monté pivotant à l'avant d'un véhicule autour d'un axe horizontal.

De préférence, la brosse présente un diamètre qui est environ le double de celui du balai rotatif.

Dans un premier mode de réalisation de l'invention, le balai est constitué par une pluralité de pales s'étendant radialement depuis un arbre de rotation.

Selon une première variante, ces pales sont constituées par des filaments de brosse réunis dans des plans passant par l'axe du balai rotatif.

Selon une seconde variante, les pales sont réalisées en caoutchouc sous forme de bandes dont la grande dimension est parallèle à l'axe du balai rotatif.

La vitesse de rotation du balai rotatif est avantageusement comprise entre 100 et 600 tours par minute.

De manière à assurer un balayage optimal du sol après passage de la brosse cylindrique, le balai rotatif est avantageusement monté sur le châssis de manière à pouvoir monter ou descendre en suivant les irrégularités du sol, de sorte qu'il demeure en permanence en contact avec le sol.

A cet effet, l'arbre de rotation du balai rotatif peut être supporté par deux bras articulés sur le châssis autour d'axes horizontaux.

Dans un second mode de réalisation de l'invention, les pales du balai rotatif sont montées sur l'arbre de ce dernier par l'intermédiaire de supports déformables comprenant au moins deux bielles parallèles formant un parallélogramme déformable.

Grâce à de tels supports déformables, les pales du balai sont aptes à monter et descendre en fonction du relief du sol tout en demeurant verticales au moment où elles touchent le sol. Ainsi, les fruits balayés par lesdites pales sont projetés en direction de la brosse cylindrique sans être écrasés entre la pale et le sol.

Dans une variante de ce mode de réalisation, le balai rotatif est constitué par une pluralité de pales de faible largeur juxtaposées sur toute la longueur du balai et montées individuellement sur un support déformable. Chaque pale étant libre de monter ou descendre en fonction du relief du sol, le balai rotatif épouse ainsi parfaitement le sol sur toute sa longueur.

Dans un troisième mode de réalisation, les pales sont réalisées par superposition de plusieurs bandes souples ayant des longueurs croissantes dans le sens inverse au sens de rotation du balai.

Ainsi, lors de la rotation du balai, les bandes dont la longueur est inférieure à la distance entre l'arbre du balai et le sol demeurent verticales lors de leur passage en dessous de l'arbre, tandis que les bandes dont la longueur est supérieure à cette distance frottent sur le sol et se plient pour passer sous l'arbre.

En choisissant une répartition homogène entre les longueurs des différentes bandes, en fonction des disparités du sol que l'on peut s'attendre à rencontrer, on obtient un balai rotatif qui peut être monté de manière fixe sur le châssis, tout en comportant toujours une bande de longueur appropriée pour balayer les fruits sur le sol en demeurant verticale.

De préférence, la distance entre le balai rotatif et la brosse est maintenue constante par des biellettes réglables prévues à cet effet.

La récupération des fruits peut s'effectuer, selon un mode de réalisation préféré de l'invention, à l'aide d'une ou plusieurs bandes transporteuses ou de tapis à claire-voie qui permettent l'élimination de la terre et des déchets éventuellement ramassés avec les fruits.

Dans le but de mieux faire comprendre l'invention on va en décrire maintenant deux modes de réalisation donnés à titre d'exemples non limitatifs en référence au dessin annexé dans lequel :
- la figure 1 est une vue de dessus d'un dispositif selon l'invention,

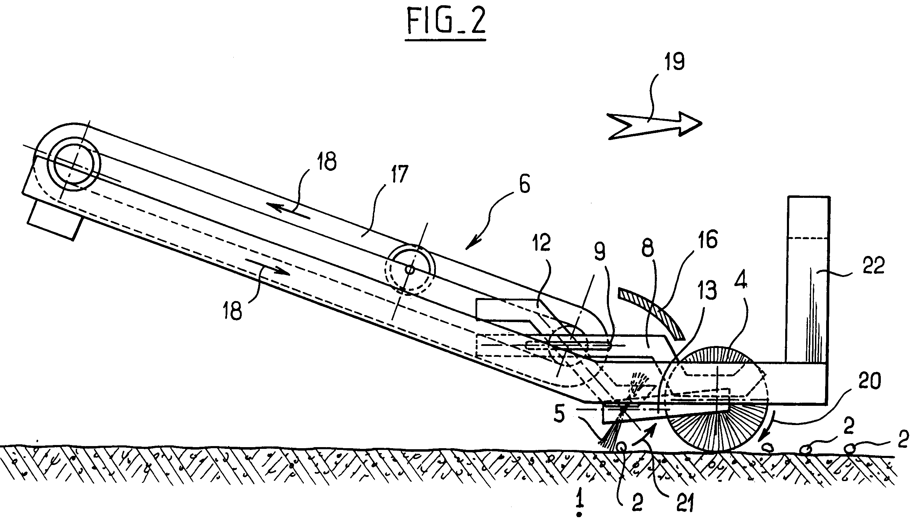

- la figure 2 est une vue en coupe selon II-II de la figure 1,
- la figure 3 représente en perspective un balai rotatif selon un autre mode de réalisation de l'invention,
- la figure 4 est une vue de côté du balai rotatif de la figure 3,
- la figure 5 est une vue en élévation d'une variante de balai rotatif,
- la figure 6 représente en perspective un élément du balai de la figure 5,
- la figure 7 représente en perspective un autre mode de réalisation d'un élément de balai rotatif, et
- la figure 8 est une vue de côté du balai rotatif de la figure 7.

Sur le dessin, on a représenté la surface d'un sol 1 sur lequel sont répandues des prunes 2.

Conformément à l'invention, le dispositif comporte un châssis 3, une brosse cylindrique 4, un balai rotatif 5 et un moyen de récupération des fruits 6.

La brosse cylindrique 4 est montée libre en rotation autour d'un axe horizontal 7, relié à un arbre fixe 3a du châssis 3 par l'intermédiaire de bras 8 qui comportent une lumière 9, laquelle permet un débattement d'avant en arrière de la brosse 4 par rapport au châssis 3.

Dans le cas présent, l'ensemble du dispoositif est monté pivotant à l'avant d'un véhicule agricole non représenté, autour d'un axe horizontal, et repose sur le sol par l'intermédiaire de roues directionnelles 10, montées sur des vérins 10a.

En fonction de la rigidité des filaments de la brosse 4, on détermine la longueur de la partie arrière des bras 8 destinée à jouer le rôle de contrepoids.

Le balai rotatif 5 est constitué par deux pales 8 qui sont formées de filaments de brosse.

L'arbre 11 du balai rotatif 5 est supporté par des bras 12 qui sont articulés sur l'arbre fixe 3a du châssis 3 de manière à pouvoir monter ou descendre librement en fonction des irrégularités du sol sur lequel repose le balai rotatif 5.

Des biellettes 13 reliant l'arbre 11 du balai à l'axe 7 de la brosse permettent de maintenir le balai rotatif 5 à distance constante de la brosse cylindrique 4.

Un moteur 14 entraîne en rotation le balai rotatif 5 par l'intermédiaire d'une chaîne 15, à une vitesse d'environ quatre cents tours par minute dans le sens opposé au sens de rotation de la brosse cylindrique 4.

Au-dessus du balai rotatif 5, un déflecteur 16 permet de rabattre les fruits sur une bande transporteuse 17.

Des flèches 18 indiquent le sens de déplacement de la bande transporteuse 13.

Une flèche 19 indique le sens du déplacement du dispositif selon l'invention.

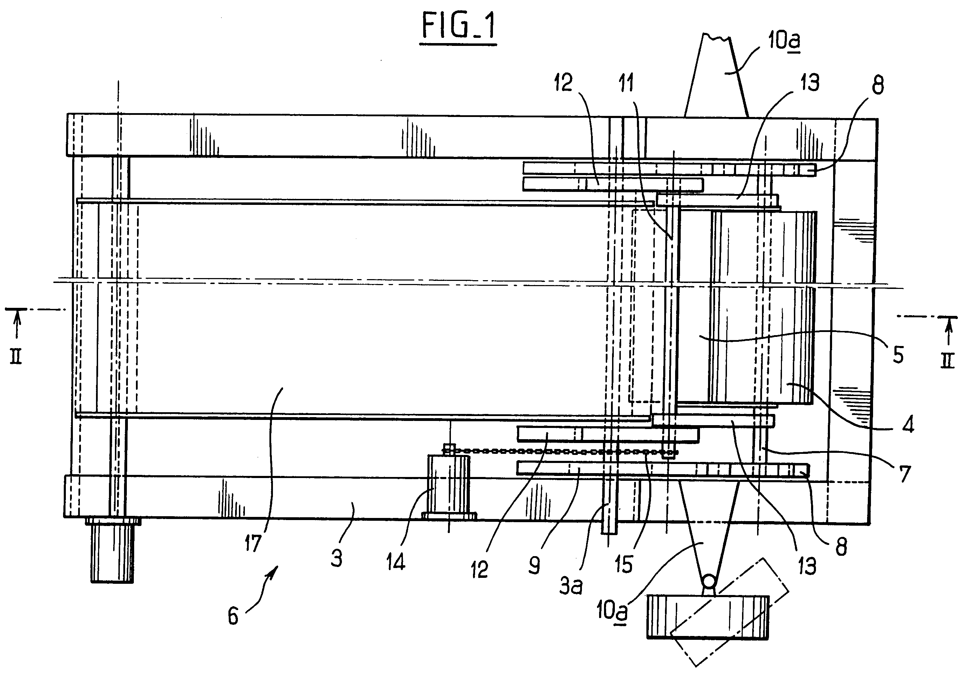

Lors du déplacement du dispositif - vers la droite par rapport à la figure 1 - la brosse cylindrique 4 roule sur le sol en tournant dans le sens indiqué par la flèche 20.

En roulant sur les prunes 2, la brosse cylindrique 4 les déplace légèrement vers l'arrière.

En effet, les filaments de la brosse 4 fléchissent lorsqu'ils passent à la verticale de l'axe 7 et, après avoir franchi cette position, se redressent en chassant vers l'arrière les prunes présentes sur le sol.

Ceci a pour effet de dégager les prunes qui pourraient être légèrement enfoncées dans le sol.

Après le passage de la brosse cylindrique 4, les prunes sont balayées par le balai rotatif 5 qui tourne dans le sens indiqué par la flèche 21.

Les prunes 2 sont alors éjectées vers la brosse 4, puis vers la bande transporteuse 17 où elles sont récupérées.

A l'avant du dispositif, des rouleaux (non représentés) entraînés dans le même sens de rotation que le balai rotatif 5 permettent de regrouper les fruits sur la trajectoire de la brosse cylindrique 4.

Un montant transversal 22 supporte ces rouleaux. La forme en U de ce montant 22 a pour fonction d'éviter que ce dernier ne vienne au contact d'éventuels obstacles.

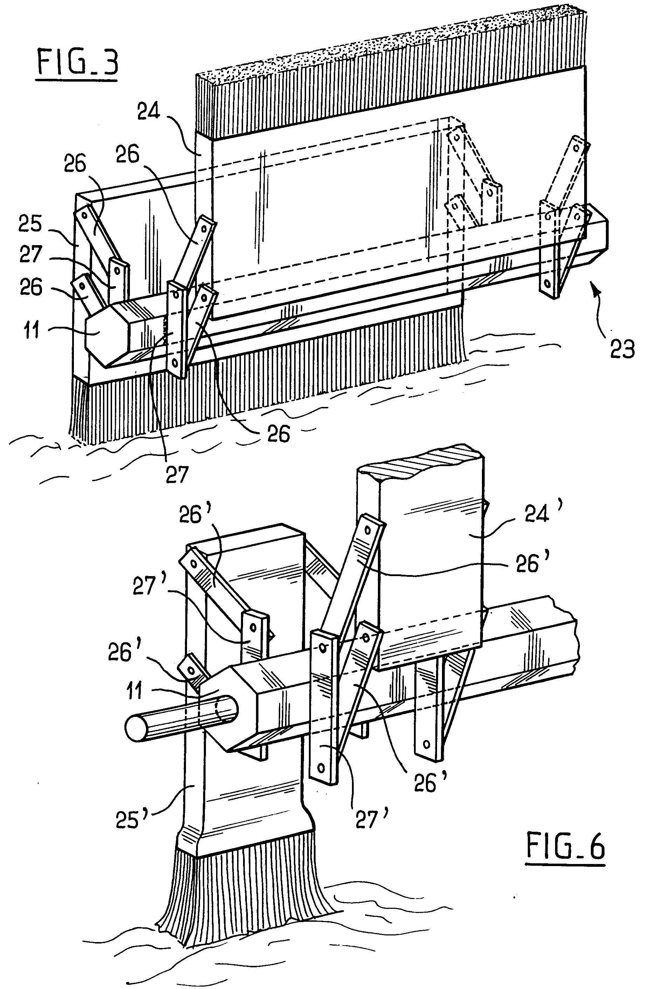

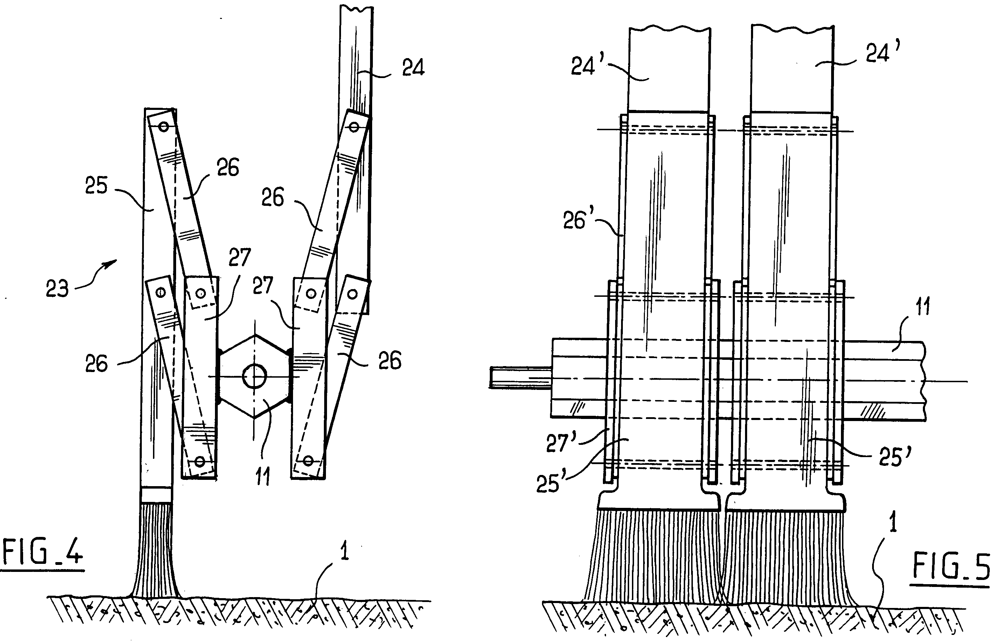

Le balai rotatif 23 représenté sur les figures 3 et 4 comporte également deux pales mais, à la différence du mode de réalisation précédent, ces deux pales 24,25 sont montées sur l'arbre 11 par l'intermédiaire de supports déformables comprenant chacun deux biellettes 26 parallèles qui sont articulées sur une barrette 27, elle-même soudée sur l'arbre 11.

A cet effet, l'arbre 11 présente une section hexagonale de manière à offrir une surface de soudure plane pour chaque barrette 27.

Comme on le voit clairement sur la figure 4, pour chaque pale, les deux biellettes 26, la barrette 27 et ladite pale 25 forment un parallélogramme déformable qui permet à la pale 25 de changer de hauteur en fonction du relief du sol. Sur la figure 4, la pale 25 au contact du sol se trouve en position haute maximale tandis que la pale 24 opposée est déployée au maximum sous l'effet de la force centrifuge due à la rotation de l'arbre 11.

Grâce à de tels supports déformables, chaque pale se présente au contact du sol, quel que soit le relief, dans une position verticale, ce qui permet d'éviter qu'un fruit ne soit écrasé entre l'extrémité de la pale et la surface du sol.

Au contraire, grâce à cette disposition, le fruit est frappé latéralement et projeté en direction de la brosse cylindrique 4.

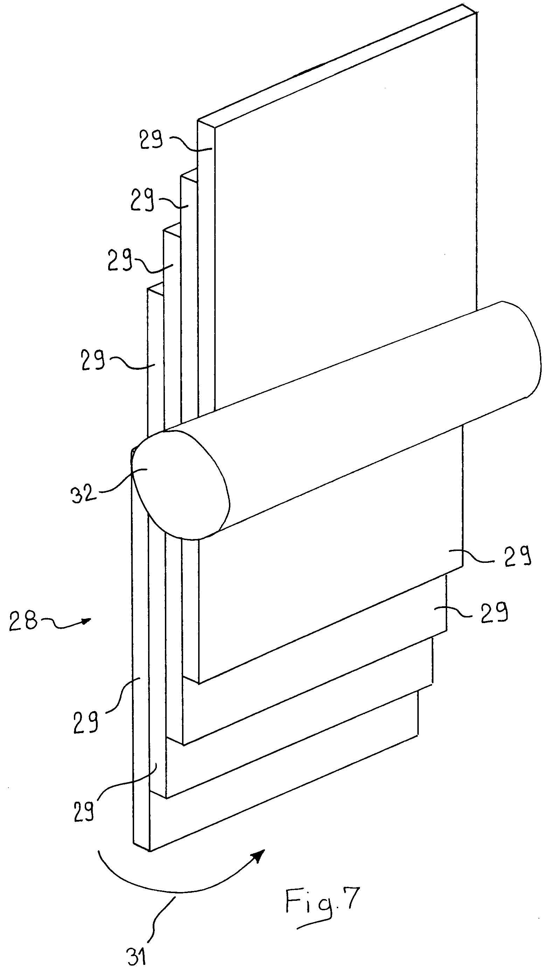

Dans la variante préférée représentée sur les figures 5 et 6, chaque pale est subdivisée en une pluralité de pâles 24', 25' disposées côte-à-côte et montées indépendamment sur des supports déformables individuels.

Ainsi, sur toute la longueur de l'arbre 11, chaque pale 24', 25' peut ajuster automatiquement sa hauteur en fonction du relief du sol.

On voit sur la figure 6 que les extrémités des pales se rejoignent sur le sol et assurent ainsi une continuité sur toute la longueur du balai rotatif.

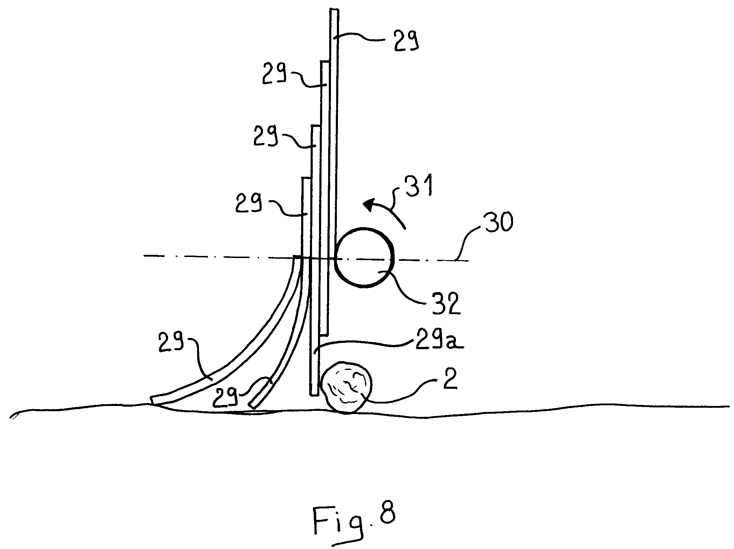

Dans le mode de réalisation des figures 7 et 8, chaque pale 28 comporte une pluralité de bandes souples 29, par exemple en caoutchouc, qui sont assujetties à l'arbre 32 du balai par un moyen non représenté.

La longueur des bandes, définie comme étant la distance mesurée depuis un plan 30 perpendiculaire aux bandes et passant par l'axe du balai, est décroissante dans le sens de rotation du balai indiqué par la flèche 31.

Pour assurer une mise en contact permanente du balai rotatif avec le sol, on peut, en outre, fixer le balai rotatif sur le châssis de manière à ce qui'il puisse monter et descendre en fonction du relief du sol. Toutefois, grâce à la présence des bandes souples 29 de différentes longueurs, cette mise en contact permanent peut être assurée même avec un balai rotatif immobile par rapport au châssis.

Sur la vue de côté de la figure 8, on voit que, lors de la rotation du balai rotatif, il existe toujours une bande souple 29a de longueur appropriée pour passer à la verticale de l'arbre 32 sans se plier et ainsi balayer un fruit 2 sans l'écraser.

On voit que le dispositif selon la présente invention est d'une réalisation particulièrement simple, tout en présentant une grande efficacité de fonctionnement.

Il est bien entendu que les modes de réalisation qui viennent d'être décrits ne présentent aucun caractère limitatif et qu'ils pourront recevoir toutes modifications désirables sans sortir pour cela du cadre de l'invention.

## Revendications

1. Dispositif pour le ramasssage sur le sol de produits agricoles de petites dimensions, tels que des prunes, caractérisé par le fait qu'il comporte un châssis (3), une brosse cylindrique (4) montée librement rotative sur le châssis (3) autour d'un axe horizontal (7) et apte à rouler sur le sol (1) lors de l'avancement du châssis (3), un balai rotatif (5) d'axe horizontal (11) situé à l'arrière de la brosse (4) et en contact avec le sol (1), entraîné en rotation à vitesse élevée en sens inverse du sens de rotation de la brosse (4), et un moyen de récupération (17) des fruits situé à proximité du balai rotatif (5).

2. Dispositif selon la revendication 1, caractérisé par le fait que le balai rotatif (5) présente un diamètre environ égal à la moitié du diamètre de la brosse (4).

3. Dispositif selon l'une quelconque des revendications 1 et 2, caractérisé par le fait que l'axe horizontal (11) du balai rotatif (5) est libre de monter ou descendre en suivant les irrégularités du sol (1).

4. Dispositif selon l'une quelconque des revendications 1 à 3, caractérisé par le fait que le balai rotatif (5) est constitué par une pluralité de pales (24, 25, 24', 25') s'étendant radialement depuis un arbre de rotation (9).

5. Dispositif selon l'une quelconque des revendications 1 à 3, caractérisé par le fait que les pales (24, 25, 24', 25') sont montées sur l'arbre (11) du balai rotatif en étant supportées par des supports déformables comprenant chacun deux biellettes parallèles (26) formant un parallélogramme déformable.

6. Dispositif selon la revendication 5, caractérisé par le fait que le balai rotatif est constitué par une pluralité de pales (24', 25') de faible largeur juxtaposées sur toute la longueur du balai (5) et montées individuellement sur des supports déformables (26').

7. Dispositif selon l'une quelconque des revendications 1 à 3, caractérisé par le fait que les pales (28) sont réalisées par superposition de plusieurs bandes souples (29) ayant des longueurs croissantes dans le sens inverse au sens de rotation du balai rotatif (5).

8. Dispositif selon l'une quelconque des revendications 1 à 7, caractérisé par le fait que les pales (24, 25, 24', 25', 28) sont constituées par des filaments de brosse.

9. Dispositif selon l'une quelconque des revendications 1 à 7, caractérisé par le fait que les pales (24, 25, 24', 25', 28) sont réalisées en caoutchouc.

10. Dispositif selon l'une quelconque des revendications 1 à 9, caractérisé par le fait que le moyen de récupération de fruits est constitué par au moins une bande transporteuse (13).
